# EUROPEAN PATENT APPLICATION

(11) **EP 4 707 089 A1**
(43) Date of publication of application: **11.03.2026**
(21) Application number: 24199371.6
(22) Date of filing: 10.09.2024
(51) Int. Cl.: B60T 13/66

(54) **REDUNDANT BRAKE SYSTEM FOR HIGHLY AUTOMATED VEHICLES**

(71) Applicant: KB Intellectual Property GmbH & Co. KG, 82049 Pullach (DE)
(72) Inventor: GYURKÓ, Zoltán, 1047 Budapest (HU); NEMETH, Huba, 1116 Budapest (HU); ADLER, Tamas, 2030 Erd (HU); GÜCKER, Ulrich, 71701 Schwieberdingen (DE); THOMEN, Matthias, 70182 Stuttgart (DE); MOLNAR, Peter, 1046 Budapest (HU); FARKAS, Peter, 3525 Miskolc (HU)

(57) **Abstract**

The brake system for a vehicle includes at least two electronic control units (3, 4, 24) responsible for managing brake functions, vehicle dynamics, and potentially, automated driving features. It features a first and a second axle pressure modulator (9, 10) for controlling braking on different axles; the first modulator (9) is connected to service brake chambers (12) for a first axle, while the second modulator (10) is linked to spring brake cylinders (13) for a second axle. A compressed air supply module (14), connected to the second control unit, provides the necessary air for both modulators. This setup ensures precise braking control across the vehicle, enhancing safety and performance.

## Description

This invention relates to a brake system for a driven vehicle, in particular to a brake system for an autonomously driven vehicle, preferably an autonomously driven transport vehicle as e.g. a truck and trailer combination.

The autonomous operation of transport vehicles is a new field of innovations. More sophisticated functions require special hardware infrastructure.

Up to now, in particular commercial vehicle systems require the presence and attention of the driver. However, prospectively, a driver will be less involved into a driving control task of the vehicle. Therefore, autonomous systems are going to take over more significant driven functions which, however, requires increased reliability levels and consequently different types of system redundancies.

Nowadays, commercial vehicles use electro-pneumatic or by-wire brake systems in which an electronic part of a control is realized as a single circuit control. In case of malfunction of the control electronics, nevertheless, the driver is able to control the pneumatic part of the brake system by foot because a two-circuit pneumatic backup system is still available.

However, in case of highly automated vehicles in which the driver is not anymore in the control loop or, is even not available or present in the vehicle, the above brake system would be unsatisfactory since there is no means which would substitute the brake control of the driver in case of malfunction of the single electronic control circuit.

EP 3626559 A1 shows a brake system comprising a first electronic brake control unit connected to a first electric power supply unit and a second electronic brake control unit connected to a second electric power supply unit. The system also includes a first axle pressure modulator for service brake chambers and a second axle pressure modulator for spring brake cylinders. Two power supply switches are connected to both the first electronic brake control unit and the second electronic brake control unit, and to one of the first axle pressure modulator and the second axle pressure modulator respectively.

Against this background, it is a technical problem of the present invention to provide a safer and more redundant brake system which enhances reliability in case of an autonomous operation of a vehicle.

The object is achieved by a redundant brake system according to claim 1 and a vehicle according to claim 15. Advantageous further developments are subject-matter of the dependent claims.

According to an aspect of the invention, a redundant brake system for a vehicle comprises: a first electronic control unit for controlling the brake functionalities and optionally vehicle dynamics and/or highly automated driving functionalities, at least a second electronic control unit for controlling the brake functionalities and optionally vehicle dynamics and/or highly automated driving functionalities, and a first axle pressure modulator connected to service brake chambers associated with a first axle of the vehicle, and a second axle pressure modulator connected to spring brake cylinders associated with a second axle of the vehicle and an compressed air supply module, wherein a compressed air supply module is at least connected to the second electronic control unit and is configured to provide air for at least the first axle pressure modulator and the second axle pressure modulator. The first electronic control unit is at least electronically connected to the first axle pressure modulator and the second axle pressure modulator and the second electronic control unit is at least electronically connected to the first axle pressure modulator.

By providing at least two electronic control units, a reliability against malfunction is enhanced since in case of a single failure, the vehicle can be operated further on in a safe manner by still having a redundant system. When the brake is actuated, compressed air is directed into the brake actuator or spring chamber. In service brakes, this compressed air pushes a piston or diaphragm, which then applies force to the brake mechanism, such as brake pads or shoes, creating friction to slow down or stop the vehicle. In spring brake chambers, which are used for parking or emergency brakes, compressed air is used to counteract a powerful spring. When the vehicle is in operation, the spring is held compressed by air pressure.

In an advantageous implementation of the redundant brake system, the system further comprises a first electric power supply unit, wherein the first electronic control unit is connected to the first electric power supply unit, and a second electric power supply unit, wherein the second electronic control unit is connected to the second electric power supply unit.

The reliability of the redundant brake system is further enhanced since the redundant brake system is redundantly supplied with electrical power. The enhanced reliability of the redundant brake system, achieved through its redundant electrical power supply, ensures continuous operation and safety even in the event of a primary power failure.

In a further advantageous implementation of the redundant brake system, the compressed air supply module is connected to the first and second electronic control units and / or acts as a gateway for the communication between the first and second electronic control units.

The advantage of this embodiment lies in the interconnectivity and redundancy of the system. In the event of a failure, the compressed air supply module could communicate crucial information such as fault diagnostics, system status, and redundancy activation between the first and second electronic control units to ensure seamless operation and safety.

In a further advantageous implementation of the redundant brake system, the second electronic control unit is a highly automated driving control unit for generating a direct redundant third brake demand for the first axle pressure modulator, wherein the brake system preferably further comprises at least one electro-pneumatic control valve and wherein the electronic control unit can control the at least one electro-pneumatic control valve, wherein preferably the at least one electro-pneumatic control valve is an ABS valve.

The advantage of this embodiment lies in the interconnectivity and the ability of the automatic driving control unit to send signals directly to the first axle pressure modulator. This further increases redundancy and reliability. In addition, reliability is increased by directly controlling at least one electro-pneumatic control valve.

In a further advantageous implementation of the redundant brake system the compressed air supply module is fluidically connected to the front axle pressure modulator, the rear axle pressure modulator, the trailer control module and the electronic parking brake controller.

This embodiment offers enhanced flexibility and efficiency in brake management by enabling direct, fluidic connections between the compressed air supply module and various pressure modulator components across the vehicle and trailer.

In a further advantageous implementation of the redundant brake system the brake system further comprises an electronic parking brake controller, connected to the first and second electronic control units and wherein preferably the electronic parking brake controller is integrated within the compressed air supply module.

The integration of the electronic parking brake control unit into the compressed air supply module and its connection to the first and second electronic control units simplifies the architecture of the brake system and enables centralized control and improved redundancy.

In a further advantageous implementation of the redundant brake system the brake system further comprises a battery monitoring system being adapted to monitor at least one battery state of the first and second electric power supply units.

The installation of a battery monitoring system that is able to monitor the status of both the first and second power supply units significantly increases the reliability of the braking system, as it ensures constant power availability and recognizes potential battery problems at an early stage.

In a further advantageous implementation of the redundant brake system the brake system further comprises at least one electro-pneumatic control valve and wherein the first and second electronic control units are adapted to control the at least one electro-pneumatic control valve, wherein preferably the at least one electro-pneumatic control valve is an ABS valve. More preferably, at first and second electro-pneumatic control valve are provided, the first electro-pneumatic control valve adapted to be controlled by the first electronic control unit, the second electro-pneumatic control valve being adapted to be controlled by the second electronic control unit. Preferably, the first and second electro-pneumatic control valve are present on the left and right side of the axle.

This embodiment increases the flexibility and safety of the system by enabling the separate control of at least one electro-pneumatic control valve, such as an ABS valve, by two electronic control units, ensuring that critical braking functions such as the anti-lock brake remain functional and respond optimally under different conditions and even if a single control unit fails.

This design ensures redundancy and diversification in control and increases the reliability and safety of the system by controlling separate electro-pneumatic control valves independently of each other from different electronic control units, thus preventing the failure of a single control path.

In a further advantageous implementation of the redundant brake system the brake system further comprises a trailer control module at least connected to the first electronic control unit.

Incorporating a trailer control module that connects at least to the first electronic control unit allows for integrated management of both vehicle and trailer braking systems, enhancing coordination and safety during braking operations, especially under heavy load or in complex driving conditions.

In a further advantageous implementation of the redundant brake system the first electronic control unit is adapted to digitally control the front and rear axle pressure modulators and wherein the second electronic control unit is adapted to digitally control the front axle pressure modulator and / or the electro-pneumatic valve, wherein the electro-pneumatic valve, is fluidically connected to the compressed air supply module and the front axle pressure modulator.

Digital control of the pressure modulators via the electronic control units enables precise and responsive adjustment of the brake pressure, which significantly improves braking accuracy and vehicle stability under different driving conditions.

In a further advantageous implementation of the redundant brake system the electronic control units are adapted to process only electric service and parking brake demands.

In a further advantageous implementation of the redundant brake system the electronic control units are adapted to process brake demands from secondary vehicle components via inter-process communication.

By enabling the electronic control units to process braking requests from secondary vehicle components via cross-process communication, a more integrated and responsive vehicle control system is created that enables seamless coordination between braking and other vehicle dynamics, improving safety and the driving experience.

In a further advantageous implementation of the redundant brake system the brake system further comprises a foot brake module and a first external signal source and / or a second external signal source wherein a break demand can be obtained internally in the electronic control units and externally via the foot brake module and / or the first and second external signal sources.

This configuration increases the flexibility and responsiveness of the system, as braking requests can be made both internally in the electronic control units and externally via the foot brake module and/or a first and second external signal source, ensuring a comprehensive range of input mechanisms for initiating braking reactions under different conditions and scenarios.

According to an aspect of the invention, a vehicle, comprising the aforementioned brake system, which preferably is a commercial vehicle, more preferable an electric vehicle

Secondary vehicle components according to the application are devices which enhance vehicle safety, efficiency, and comfort by supporting primary driving functions. These systems, integral to vehicle dynamics control and highly automated driving (HAD), utilize advanced sensor data to improve the driving experience. Notable examples are: Adaptive Cruise Control (ACC), which maintains safe vehicle distances; Lane Keeping Assist (LKA), preventing unintended departure from driving lanes; and Automated Emergency Braking (AEB), automatically stopping the vehicle to avoid collisions. Other innovative features like Traffic Sign Recognition (TSR) inform drivers of relevant traffic signs, while Vehicle Stability Control (VSC) ensures stability by detecting and correcting skids. Blind Spot Detection (BSD) and Cross Traffic Alert enhance awareness of surrounding vehicles, particularly in blind spots or when reversing. Driver Fatigue Detection promotes safety by alerting drivers to signs of drowsiness.

Embodiments of the approach presented here shall be explained in greater detail in the subsequent description with reference to the figures, wherein:
- Fig. 1: shows a brake system architecture of a first embodiment of a redundant brake system according to the invention with two electronic control units.
- Fig. 2: shows a brake system architecture of a second embodiment of a redundant brake system according to the invention with two electronic control units, wherein the compressed air supply module acts as a gateway for the communication between the electronic control units.
- Fig. 3: shows a brake system architecture of a third embodiment of a redundant brake system according to the invention, wherein the foot brake module is replaced with a highly automated driving (HAD) electronic control unit.

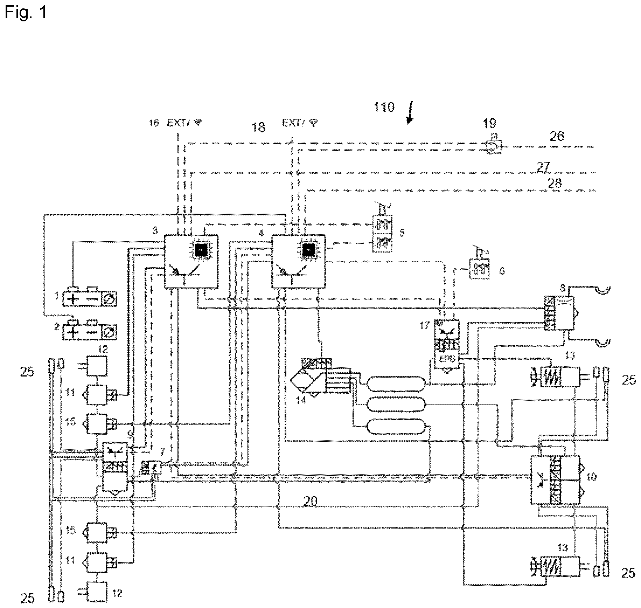

Fig. 1 shows a schematic illustration of a vehicle comprising a brake system 110 according to the first embodiment of the present invention. The vehicle is a utility vehicle or commercial vehicle, such as a truck. The braking system according to the invention can be used for any other type of vehicle, such as i.e. passenger cars. According to this embodiment, the vehicle comprises a first axle and a second axle, as shown schematically in Figure 1. However, the vehicle can also have several axles, whereby the brakes of the other axles can be designed in accordance with one of the axles of this embodiment. Furthermore, the vehicle comprises a first electronic brake control unit 3 and second electronic brake control unit 4.

The brake system 110 comprises a first electric power supply unit 1, a second electric power supply unit 2, a first electronic control unit 3, a first or front axle pressure modulator 9, a second or rear axle pressure modulator 10, two service brake chambers 12, two spring brake cylinders 13, a second electronic control unit 4.

According to this embodiment, the brake system 110 further comprises an electronic parking brake controller 17, a service foot brake module 5, a parking foot brake module 6, optionally a park brake lever sensor, a trailer control module 8, two first pressure control valves 11, two second pressure control valves 15, a compressed air supply module 17, an electro-pneumatic valve 7, a control room link 20, a first external signal source 16, a second external signal source 17 and preferably a group of brake sensors 25.

The first electric power supply unit 1 and the first electronic control unit 3 form part of the first service brake subsystem. The second electric power supply unit 2 and the second electronic control unit 4 form part of the second service brake subsystem. In the event of a malfunction of the first service brake subsystem, the second service brake subsystem is usable as a redundant service brake subsystem, or in other words to perform service brake functions of the brake system 110.

The first electric power supply unit 1 is electrically connected to the first electronic control unit 3. The first electronic control unit 3 is connected to the first axle pressure modulator 9 via a digital signal line. The first axle pressure modulator 9 is preferably additionally electrically connected to the first electronic control unit 3 via an analogous electric signal preferably configured as a combined or separated supply and signal line. Furthermore, the first electronic control unit 3 is electrically connected to the second axle pressure modulator 10 via a digital signal line. Furthermore, the second axle pressure modulator 10 is additionally electrically connected to the first electronic control unit 3 via an analogous electric signal preferably as a combined or separated supply and signal line. Also, the first electronic brake control unit 3 is electrically connected to first pressure control valves 11 (which can be ABS valves), to the trailer control module 8, optionally to the compressed air supply module 14 and is digitally connected to the service foot brake module 5 and the electronic parking brake controller 17. The analogous electrical signal lines can in turn be combined or separated with the supply lines alternatively the redundant signal connection is configured in digital form. The digital signal line in Figure 1 is shown for the service foot brake module 5, the parking foot brake module 6 and the electronic parking brake controller 17.

The second electric power supply unit 2 is electrically connected to the second electronic control unit 4. The second electronic control unit 4 is connected to the electro-pneumatic valve 7 via a digital signal line. The electro-pneumatic valve 7 is preferably additionally electrically connected to the second electronic control unit 4 via an analogous electric signal preferably configured as a combined or separated supply and signal line The function of the electro-pneumatic valve 7 is to precisely control the flow of compressed air to a backup port of the pressure modulator 9 based on electronic signals, thereby controlling the flow to the brake chambers indirectly, ensuring accurate brake application and system responsiveness. Also, the second electronic control unit 4 is electrically connected to the second pressure control valves 15 and to the compressed air supply module 14 and digitally connected to the service foot brake module 5 and the electronic parking brake controller 17. The analogous electrical signal lines can in turn be combined or separated with the supply lines alternatively the redundant signal connection is configured in digital form. The digital signal line in Figure 1 is shown for the service foot brake module 5, the electronic parking brake controller 17.

The first pressure control valves (ABS) 11 and the second pressure control valves (ABS) 15 of the first axle can be controlled independently (by the first or second electronic control unit 3 and 4, respectively) and provide redundancy until the pneumatic braking force is adjusted and fed into the service brake chambers 12. A wheel slip-dependent control or adjustment of the brake pressure remains possible due to the redundant system. Secondary sensor data, such as data obtained by wheel speed sensors 25, are fed into the two electronic control units 3, 4 independently and separately, once via the front axle pressure modulator 9 and once via the electro-pneumatic valve 7 via analogous electrical signal and supply lines. Alternatively, the wheel speed sensors 25 are connected via a digital signal line.

To realize a better and side-by-side anti-lock braking system (ABS) control, ABS pressure control modules are usually installed between the first axle pressure modulator 9 on the front axle and service brake chambers 12, which can hold or release the pressure wheel by wheel and thus at least two pneumatic channels are realized on the front axle.

The first and second electronic control unit 3, 4 encapsulates brake control functionalities alongside additional vehicle dynamics control functionalities (e.g., management of vehicle dynamics, steering, etc.) and potentially modules pertaining to highly automated driving (e.g., environmental detection and/or motion management). For the generation of brake demands internally, this first and second electronic control unit 3, 4 is equipped with an inter-process communication (IPC) mechanism (e.g., shared memory, virtual communication peripheral, OS signaling, etc.), particularly when such demands originate from the integrated Highly Automated Driving (HAD) functionalities. This facilitates a direct and efficient flow of commands within the system's architecture, without the need for external input for initiating brake actions. Furthermore, the first and second electronic control unit 3, 4 is adept at executing brake control functionalities that are capable of processing brake requests originating from external sources 16 and 18 utilizing a digital communication protocol. This dual-channel approach for receiving brake commands-both internally via IPC and externally via digital communication-enhances the system's flexibility and responsiveness to varying braking scenarios, thereby supporting a robust and adaptive brake management system within the vehicle.

The communication switch 19 is connected to the first electronic control unit 3, the second electronic control unit 4 and a first trailer communication line 26 for communication with a trailer brake system via digital electric signal lines. The communication switch 19 is configured to connect the first electronic control unit 3 or the second electronic control unit 4 to the trailer communication line 26 for communication with the trailer brake system.

According to the embodiment of the present invention shown in Fig. 1, the first electronic control unit 3 and the second electronic control unit 4 are identical units, or in other words configured and constructed in an identical way. Both units can be designed in the same or in separate housings.

The electro-pneumatic valve 7 is controlled by the second electronic control unit 4 and is fluidically connected to the compressed air supply module 14 and the front axle pressure modulator 9 via a pneumatic supply line. Also, the electro-pneumatic valve 7 is fluidically connected to the first pressure control valves (ABS) 11 and the second pressure control valves (ABS) 15 of the front axle via the front axle pressure modulator 9 via a pneumatic service brake control line. Furthermore, the electro-pneumatic valve 7 is electrically connected to a group of brake sensors 25 for the first axle via analogous electric signal and supply lines.

The first axle pressure modulator 9 is fluidically connected to the compressed air supply module 14 via a pneumatic supply line. Also, the first axle pressure modulator 9 is fluidically connected to the first pressure control valves 11 and second pressure control valves 15 via pneumatic service brake control lines. Each of the pressure control valves 11, 15 is fluidically connected to a respective one of the service brake chambers 12 via a pneumatic service brake control line. The first axle pressure modulator 9, the first control valves 11, second pressure control valves 15 and the service brake chambers 12 are associated with a first axle of the vehicle. Furthermore, the first axle pressure modulator 9 is electrically connected to a group of brake sensors 25 for the first axle via analogous electric signal and supply lines.

The second axle pressure modulator 10 is fluidically connected to the compressed air supply module 14 via a pneumatic supply line. Furthermore, the second axle pressure modulator 10 is fluidically connected to the spring brake cylinders 13 via pneumatic service brake control lines. The second axle pressure modulator 10 and the spring brake cylinders 13 are associated with a second axle of the vehicle. The second axle pressure modulator 10 is electrically connected to the first electronic control unit 3. Also, the second axle pressure modulator 10 is electrically connected to a group of brake sensors 25 for the second axle via analogous electric signal and supply lines.

According to the embodiment of the present invention shown in Fig. 1, the first axle pressure modulator 9 and the trailer control module 8 are linked fluidically by the control room link 20.

The trailer control module 8 is configured to control braking functions of a trailer coupled to the vehicle. The trailer module 8 is electrically connected to the first electronic control unit 3 via an analogous electric line. The trailer control module 8 is fluidically connected to the compressed air supply module 14 via a pneumatic supply line. Also, the trailer control module 8 is fluidically connected to the first axle pressure modulator 9 via a pneumatic service brake control line and to the electronic parking brake controller 17 via a pneumatic park brake control line (to enable redundant control).

In an alternative embodiment, specifically designed for vehicles equipped for emergency responses, it is contemplated that the foot brake module and/or a hand control unit (not shown here) may be optionally engineered to serve as a brake demand generation unit. The foot brake module 5 and/or hand control unit is electrically connected to the first electronic control unit 3 via a digital signal line. Also, the foot brake module 5 and/or hand control unit is electrically connected to the second electronic control unit 4 via a digital signal line. This can also be applied to the second and third embodiments.

This design enables the provision for manual override of the braking system by the vehicle operator, alongside the existing automated braking capabilities. By facilitating such a provision, the system ensures that operational control can be seamlessly transitioned to manual input by the driver, in scenarios where direct intervention is deemed necessary. This incorporation of manual control capabilities alongside automated functions significantly elevates the operational flexibility and safety profile of the vehicle, especially in emergency situations where immediate human response is paramount.

The electronic parking brake controller 17 is controlled by the first and second electronic control units 3, 4 via a digital signal line. Furthermore, the electronic parking brake controller 17 is connected to the parking foot brake module 6 and optionally to a brake lever sensor via a digital signal line. The electronic parking brake controller 17 is fluidically connected to the spring brake cylinders 13 via pneumatic parking brake control lines. Also, the electronic parking brake controller 17 is fluidically connected to the trailer control module 8 via a pneumatic parking brake control line. Also, the parking brake controller 17 is fluidically connected to the compressed air supply module 14 via a pneumatic supply line.

In other words, Fig. 1 shows an architecture of a brake system 110 commercial, which may also be referred to as a schematic a redundant commercial vehicle electronic or electro-pneumatic brake system 110 (EBS). The electro-pneumatic brake system 110 comprises the following main components. The brake system 110 is redundantly supplied by the electric power supply units 1 and 2, which may be batteries. The first electronic control unit 3 is supplied from the first electric power supply unit 1 or first battery 1. The first electronic control unit 3 is configured to electronically control the front or first axle pressure modulator 9, the first pressure control valves 11 on the front or first axle, the rear or second axle pressure modulator 10 and the trailer control module 8 as well as the electronic parking brake controller 17. Front or first axle wheel brakes are actuated by the service brake chambers 12. Rear or second axle wheel brakes are actuated by the spring brake cylinders 13.

The redundant pair of the brake system 110 is provided by the second electronic control unit 4, which is configured to actuate the electro-pneumatic valve 7 also via a second CAN channel (CAN = Controller Area Network) or digital electric signal line (not shown here). The electrical power supply lines are installed to ensure the power supply of the axle modulators or axle pressure modulators 9 and 10 from the two separate electric power supply units 1 and 2 via the two electronic control units 3 and 4. The second electronic control unit 4 is supplied from the second electric power supply unit 2 or second battery 2. The second electronic control unit 4 is configured to electronically control the electro-pneumatic valve 7 of the first axle, the second pressure control valves 15 on the front or first axle, and the electronic parking brake controller 17. Front or first axle wheel brakes are actuated by the service brake chambers 12.

The communication switch 19 or CAN channel selector is installed for the trailer communication line 26, which ensures the CAN communication between the first electronic control unit 3 or the second electronic control unit 4 and the trailer. According to an embodiment, this redundant brake architecture describes a redundant brake-by-wire system, wherein pneumatics is eliminated from a cabin of the vehicle. Control rooms of the first axle pressure modulator 9 and trailer control module 8 are linked pneumatically by means of the control room link 20, for example a pipe, which in case of any axle pressure modulator failure ensures that the trailer remains controllable by the first axle pressure modulator 9. In all embodiments, the rear axle (brake chambers 13) can be controlled indirectly via the park brake module 17 as the redundant system.

When the brake system 110 is fully intact, the service brake is controlled by the first electronic control unit 3 as a master. The first electronic control unit 3 electronically controls the first and second axle pressure modulators 9 and 10 and the trailer control module 8. In case of any malfunction of the first electronic control unit 3 or the first electric power supply unit 1, brake control is taken over by the second electronic control unit 4, wherein the power supply is switched to the second electric power supply unit 2 if required, and the front axle pressure modulator 9 is controlled electronically by the second electronic control unit 4 via second CAN channels of the front axle pressure modulator 9 (not shown here).

In addition, an external interface covers communication with external systems (including trailers). The trailer communication lines 26, 27 and 28 shown in Figures 1, 2 and 3 use a standard for the Automotive Ethernet communication protocol for trailer brake systems.

Both first and second (resp. primary and redundant) control units 3, 4 can send brake requests to the trailer brake system via the Automotive Ethernet communication lines 26, 27 and 28.

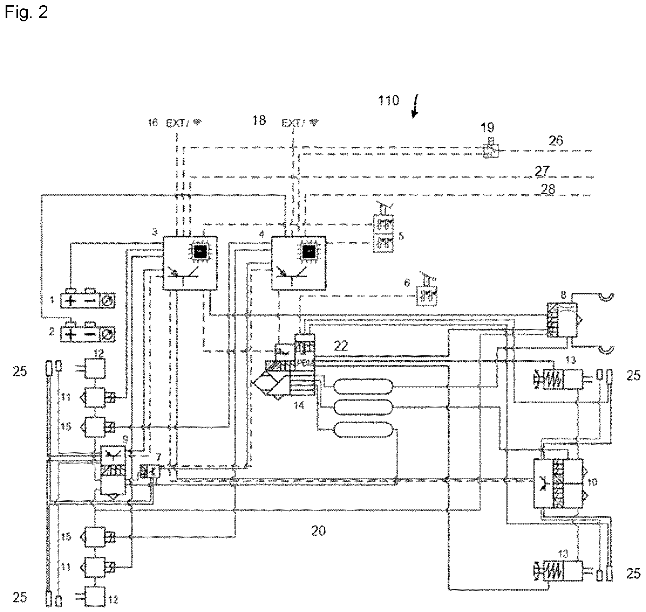

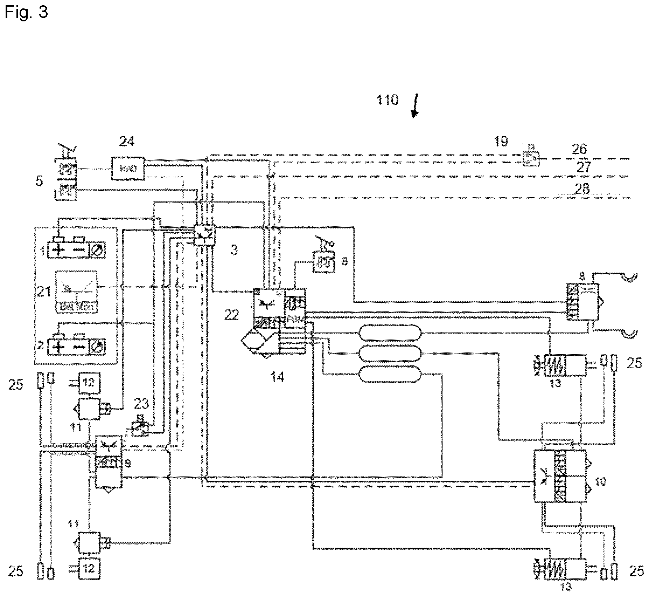

Fig. 2 shows a schematic illustration of a vehicle comprising a brake system 110 according to another embodiment of the present invention. This embodiment contains the features of the aforementioned embodiment of Figure 1, whereby the compressed air supply module 14 is designed as a gateway for communication between the first electronic control unit 3 and the second electronic control unit 4. In addition, the electronic parking brake controller 17 is integrated in or connected to the compressed air supply module 14. The compressed air supply module 14 and the electronic parking brake controller 17 can be arranged in a central unit and/or in a common housing. The combination of the modules is referred to as combined supply module 22. The combined supply module 22 may include an electrical control unit to act as a gateway between several central control units. This electrical control unit may also control other system components such as an electrical switch 23 for controlling a pressure modulator of an axle 9, 10 (cf. Fig. 3).

The compressed air supply module 14 is electronically controlled by the first electronic control unit 3 and the second electronic control unit 4 via two separate digital signal lines. In distinction to the embodiment of Figure 1, the brake sensors 25 of the second axle are fed into the connected or integrated electronic parking brake controller 17.

Fig. 3 shows a schematic illustration of a vehicle comprising a brake system 110 according to another embodiment of the present invention. This embodiment contains the features of the aforementioned embodiment of Figure 2, wherein the second electronic control unit is configured as a highly automated driving (HAD) electronic control unit 24. Alternatively, the brake demand may originate from any other external brake demand unit, such as a network interface for obtaining brake demands from a cloud or central data center. The additional brake demand (of the HAD-ECU 24) acts as a redundant brake demand in addition to the first electronic control unit 3. This enables double redundancy. In the presented embodiment, the HAD electronic control unit 24 fulfills the function of a central electronic control unit. This configuration is distinguished by its integration of both HAD functionalities and brake control functionalities within a singular, unified domain/central controller. By incorporating these critical control functions, the system achieves a harmonized operational framework that enhances the efficiency and reliability of the automated driving and braking systems. This consolidated approach facilitates streamlined communication and coordination between the HAD and braking systems.

In order to enhance the dual redundancy mechanism, an optional incorporation of a battery monitoring system 21 is proposed for both the first electric power supply unit 1 and the second electric power supply unit 2. This system is engineered to establish communication with the electronic braking system (EBS) electronic control unit 3 through CAN/LIN bus protocols. The principal aim of this addition is to facilitate real-time tracking and logging of the battery states over extended periods. This capability enables the precise assessment of the wear and overall health status of each battery. By integrating such a monitoring system, it becomes possible to proactively identify degradation trends and predict potential failures, thereby enhancing the reliability and safety of the vehicle's critical systems through advanced diagnostics and maintenance forecasting.

The HAD electronic control unit 24 is digitally connected to the front axle pressure modulator 9. Also, the HAD electronic control unit 24 is electrically connected to the first electronic control unit 3 and the combined supply module 22 via an analogous electric signal line. In this way the HAD electronic control unit 24 can be supplied with power from both electric power supply units 1 and 2.

The combined supply module 22 is electrically connected to the electric switch module 23 and the combined supply module 22 is supplied by the second electric power supply unit 2. The electric switch module 23 is also electrically connected to the first electronic control unit 3 as well as to the front axle pressure modulator 9 and is configured to control the power supply and preferably the signals for the front axle pressure modulator 9. The electrical connection can be established via an analogous electrical signal, preferably as a combined or separate supply and signal line.

The first electronic control unit 3 is configured to control and/or receive data of the battery monitoring system 21 to map the battery state via a digital signal line.

The brake system for a vehicle, is preferably characterized by the first electronic control unit 3 that is specifically adapted to digitally control the pressure modulators 9, 10 and by the second electronic control unit 4 formed as the highly automated driving (HAD) control unit 24 that is specifically adapted to digitally control the front axle pressure modulator 9. This arrangement facilitates precise manipulation of braking pressure through digital means, allowing for enhanced control and responsiveness of the brake system to varying driving conditions.

As described in the previous embodiment, the first pressure control valves 11 remain electrically directly controllable via the first electronic control unit 3. The data of the wheel sped sensors 25 of the front axle are transmitted to the first electronic control unit 3 via the front axle pressure modulator 9 and the data of the wheel sped sensors 25 of the rear axle are transmitted to the first electronic control unit 3 via the rear axle pressure modulator 10. The combined supply module 22 is also configured to receive data from the first and second external signal sources 16, 18. Both the first electronic control unit 3 and the highly automated driving (HAD) control unit 24 can receive brake demands from the foot brake module 5 or another external source.

In an alternative embodiment, specifically designed for vehicles equipped for emergency responses, it is contemplated that additionally the foot brake module and/or a hand control unit module may be implemented and connected to the first electronic control unit 3 or to the HAD to serve as a brake demand generation unit.

### REFERENCE SIGNS

- 1: first electric power supply unit
- 2: second electric power supply unit
- 3: first electronic control unit
- 4: second electronic control unit
- 5: service foot brake module
- 6: parking foot brake module
- 7: electro-pneumatic valve
- 8: trailer control module
- 9: front axle pressure modulator
- 10: rear axle pressure modulator
- 11: first pressure control valves
- 12: service brake chambers
- 13: spring brake cylinders
- 14: compressed air supply module
- 15: second pressure control valves
- 16: first external signal source
- 17: electronic parking brake controller
- 18: second external signal source
- 19: communication switch
- 20: control room link
- 21: battery monitoring system
- 22: combined supply module
- 23: electric switch module
- 24: highly automated driving (HAD) control unit
- 25: brake sensors
- 26: First trailer communication line (communication protocol: IS011992)
- 27: Second trailer communication line (communication protocol: IEEE 802.3 BW)
- 28: Third trailer communication line (communication protocol: IEEE 902.3 BW)
- 110: brake system

## Claims

1. Brake system (110) for a vehicle, wherein the brake system (110) comprises:
a first electronic control unit (3) for controlling the brake functionalities and optionally vehicle dynamics and/or highly automated driving functionalities;
at least a second electronic control unit (4, 24) for controlling the brake functionalities and optionally vehicle dynamics and/or highly automated driving functionalities;
a first axle pressure modulator (9) connected to service brake chambers (12) associated with a first axle of the vehicle;
a second axle pressure modulator (10) connected to spring brake cylinders (13) associated with a second axle of the vehicle;
a compressed air supply module (14), wherein the compressed air supply module (14) is at least connected to the second electronic control unit (4, 24) and is configured to provide air for at least the first axle pressure modulator (9) and the second axle pressure modulator (10);
wherein the first electronic control unit (3) is electronically at least connected to the first axle pressure modulator (9) and the second axle pressure modulator (10) and,
wherein the second electronic control unit (4, 24) is electronically at least connected to the first axle pressure modulator (9).

2. The brake system (110) for a vehicle according to claim 1 further comprising
a first electric power supply unit (1), wherein the first electronic control unit (3) is connected to the first electric power supply unit (1);
a second electric power supply unit (2), wherein the second electronic control unit (4, 24) is connected to the second electric power supply unit (2).

3. The brake system (110) for a vehicle according to claim 1, wherein the compressed air supply module (14) is connected to the first and second electronic control units (3, 4, 24) and / or acts as a gateway for the communication between the first and second electronic control units (3, 4, 24).

4. The brake system (110) for a vehicle according to any of the proceeding claims, wherein the second electronic control unit (4) is a highly automated driving control unit (24) for generating a direct redundant brake demand for the first axle pressure modulator (9), wherein the brake system (110) preferably further comprises:
at least one electro-pneumatic control valve (11) and wherein the second electronic control unit (24) can control the at least one electro-pneumatic control valve (11), wherein preferably the at least one electro-pneumatic control valve is an ABS valve.

5. The brake system (110) for a vehicle according to any of the proceeding claims, wherein the compressed air supply module (14) is fluidically connected to the front axle pressure modulator (9), the rear axle pressure modulator (10), the trailer control module (8) and the electronic parking brake controller.

6. The brake system (110) for a vehicle according to any of the proceeding claims, further comprising:
an electronic parking brake controller (17), connected to the first and second electronic control units (3, 4, 24) and wherein preferably the electronic parking brake controller (17) is integrated within the compressed air supply module (14).

7. The brake system (110) for a vehicle according to any of the proceeding claims, further comprising a battery monitoring system (21) being adapted to monitor at least one battery state of the first and second electric power supply units (1, 2).

8. The brake system (110) for a vehicle according to claims 1 to 3 and 5 to 7, wherein the brake system (110) further comprises:
at least one electro-pneumatic control valve (11, 15) and wherein the electronic control units (3, 4) can control the at least one electro-pneumatic control valve (11, 15), wherein preferably the at least one electro-pneumatic control valve is an ABS valve.

9. The brake system (110) for a vehicle according to claim 8, wherein a first electro-pneumatic control valve (11) and a second electro-pneumatic control valve (15) are provided, wherein the first electro-pneumatic control valve (11) is controlled from the first electronic control unit (3), and wherein the second electro-pneumatic control valve (15) is controlled from the second electronic control unit (4).

10. The brake system (110) for a vehicle according to any of the proceeding claims, further comprising:
a trailer control module (8) at least connected to the first electronic control unit (3)

11. The brake system (110) for a vehicle according to any of the proceeding claims, further comprising:
an electro-pneumatic valve (7), which is fluidically connected to the compressed air supply module (14) and the front axle pressure modulator (9);
wherein the first electronic control unit (3) is adapted to digitally control the front and rear axle pressure modulators (9, 10) and wherein the second electronic control unit (4) is adapted to digitally control the front axle pressure modulator (9) or wherein the second electronic control unit (24) is adapted to digitally control the electro-pneumatic valve (7).

12. The brake system (110) for a vehicle according to claims 1 to 3 and 5 to 11, wherein the electronic control units (3, 4,) are adapted to process only electric service and parking brake demands.

13. The brake system (110) for a vehicle according to any of the proceeding claims, wherein the electronic control units (3, 4, 24) are adapted to process brake demands from secondary vehicle components via inter-process communication.

14. The brake system (110) for a vehicle according to any of the proceeding claims, further comprising:
a foot brake module (5); and
a first external signal source (16); and / or
a second external signal source (18);
wherein a break demand can be obtained internally in the electronic control units (3, 4, 24) and externally via the foot brake module (5) and/or the first and second external signal sources (16, 18).

15. Vehicle, comprising a brake system (110) according to one of claims 1 to 14, which preferably is a commercial vehicle, more preferably an electric vehicle.
